# FASCICULE DE BREVET EUROPEEN

(11) **EP 3 539 058 B1**
(45) Date de publication et mention de la délivrance du brevet: **13.04.2022**
(21) Numéro de dépôt: 17808537.9
(22) Date de dépôt: 07.11.2017
(51) Int. Cl.: G06K 19/06, G06K 19/14, G07D 7/20, G07D 7/2033, G07D 7/0043, G07D 7/202

(54) **PROCÉDÉ POUR L'AUTHENTIFICATION D'UNE ILLUSTRATION**
VERFAHREN ZUR AUTHENTIFIZIERUNG EINER ILLUSTRATION
METHOD FOR AUTHENTICATING AN ILLUSTRATION

(30) Priorité: 09.11.2016 FR 1660874
(43) Date de publication de la demande: 18.09.2019
(73) Titulaire: SURYS, 77607 Marne la Vallée Cedex 3 (FR)
(72) Inventeur: PIC, Marc, 92100 Boulogne Billancourt (FR); OUDDAN, Mohammed Amine, 94170 Le Perreux sur Marne (FR)
(74) Mandataire: Bouvier, Thibault
(86) Numéro de dépôt international: PCT/FR2017/053039
(87) Numéro de publication internationale: WO 2018/087465

(56) Documents cités:
- EP-A1- 2 581 860
- EP-A1- 2 743 893
- EP-A1- 2 937 819
- DE-A1- 2 759 270

## Description

### DOMAINE DE L'INVENTION

La présente invention concerne le domaine de l'authentification d'une illustration.

Par illustration, on entend toute représentation graphique non uniforme ; par exemple une peinture, un dessin, une photographie, etc.

Par souci de concision, seul le cas où l'illustration est une photographie, en particulier un portrait, sera décrit ici.

Dans ce contexte, la présente invention trouve une application particulière dans le domaine de la vérification de documents d'identité, comprenant une photographie du porteur de document d'identité, typiquement les documents d'identité officiels (carte d'identité, passeport, permis de conduire, etc.) ou non officiels (carte d'abonnement, etc.).

En effet, la falsification de documents d'identité porte principalement sur le remplacement de la photo d'identité. Si pendant longtemps ce remplacement pouvait être assez succinct, il s'est complexifié ces dernières années avec l'utilisation d'images « morphées ».

Par image « morphée », on entend l'image résultant d'une transformation morphologique ou *morphing,* entre la photographie originale du porteur légitime du document d'identité et celle d'un fraudeur qui souhaite utiliser ce document d'identité.

Pour un fraudeur, le document d'identité subissant la manipulation est par exemple choisi de sorte à ce que le porteur légitime partage un certain nombre de traits morphologiques avec le fraudeur. Cette ressemblance morphologique entre le porteur légitime et le fraudeur facilite le travail du faussaire qui imprime ce morphing sur le document d'identité (en conservant les autres éléments de sécurité intacts), ce qui permet de tromper un contrôle visuel et parfois même automatique, tout en restant visuellement compatible avec les autres éléments de sécurité du document d'identité qui font écho à la photographie, comme par exemple une image fantôme, une image par perçage de trous, etc.

L'objectif de la présente invention vise donc à assurer que l'illustration, dans ce cas la photographie présente sur le document d'identité, est l'originale, c'est-à-dire qu'elle n'a pas été manipulée d'une manière ou d'une autre. Il s'agit donc d'authentifier l'illustration, comme elle devait être au jour de la fabrication du document d'identité, et non à authentifier le porteur du document ou le sujet de la photographie. En ce sens, la présente invention traite de photométrie et non de biométrie.

Elle s'applique bien évidemment au domaine de la sécurité, comme au domaine de l'art.

Dans le domaine de la sécurité, il est connu le document US2015/0332136 qui vise à sécuriser une photographie d'identité en entourant celle-ci d'un code-barres 2D, le code-barres 2D étant basé sur des données alphanumériques.

Les documents EP2937819 A1 et EP2743893 A1 décrivent des procédés de sécurisation de documents d'identité basés sur la présence d'un code bi-dimensionnel sur le document d'identité.

La présente invention vise à proposer une solution alternative et plus sécurisée.

### RESUME DE L'INVENTION

Plus précisément, l'invention concerne selon un premier de ses objets, un procédé pour l'authentification d'une illustration, comprenant des étapes consistant à :
- encoder un message sous la forme d'un code-barres à deux dimensions comprenant un ensemble de blocs, chaque bloc codant un fragment dudit message et comprenant un ensemble de (M) lignes et (N) colonnes, et chaque bloc comprenant un ensemble de sous-blocs codants, chaque sous-bloc comprenant un ensemble d'éléments binaires, l'étape d'encodage comprenant des étapes préalables consistant à :
- définir ou identifier un ensemble de points remarquables sur l'illustration,
- calculer un ensemble d'attributs en fonction de certains au moins des points remarquables dudit ensemble,
- sélectionner, parmi l'ensemble des attributs calculés, un ensemble d'au moins un attribut permettant de définir une empreinte numérique,
- optionnellement compresser ladite empreinte numérique,
- optionnellement signer ladite empreinte numérique au moyen d'une signature cryptographique, et
- enregistrer dans le message l'un parmi :
   - un ensemble d'au moins un attribut,
   - l'empreinte numérique,
   - l'empreinte numérique compressée,
   - l'empreinte numérique signée non compressée, et
   - l'empreinte numérique compressée et signée, chaque bloc codant comprend en outre un ensemble de sous-blocs non-codants dont la position est prédéfinie, le procédé comprenant en outre, pour chaque bloc codant, des étapes consistant à :
      - sélectionner un ensemble prédéfini de sous-blocs codants,
      - encoder sur un ensemble d'au moins un sous-bloc non-codant prédéfini le résultat de l'application d'un code correcteur d'erreurs aux valeurs encodées par ledit ensemble prédéfini de sous-blocs codants.

De préférence, on prévoit une étape consistant à rendre le code-barres à deux dimensions solidaire de l'illustration.

On peut prévoir une étape consistant à disposer le code-barres 2D de manière prédéfinie par rapport à l'illustration, optionnellement en encadrant l'illustration. Grâce à cette caractéristique, il est possible, comme décrit ultérieurement, de scanner par exemple avec un téléphone mobile toutes les informations utiles à la vérification simultanément.

On peut prévoir que l'étape de sélection d'un ensemble d'au moins un attribut permettant de définir une empreinte numérique comprend une étape consistant à sélectionner un nombre d'attributs supérieurs à une valeur seuil enregistrée dans une mémoire.

On peut prévoir une étape consistant à ajouter à l'empreinte numérique des données extrinsèques à l'illustration. En particulier on peut prévoir que l'illustration est une photographie d'un porteur de document, le procédé comprenant une étape consistant à ajouter à l'empreinte numérique de données extrinsèques à l'illustration, lesdites données extrinsèques comprenant au moins l'un des ensembles de données parmi :
- des données relatives au porteur dudit document et inscrites dans ledit document,
- des données relatives audit document,
- des métadonnées du document, comprenant :
   * une classification, des données provenant de bases de données externes, ou des conditions d'utilisation ; ou
   * une charge utile 2D ou 3D du porteur du document ; ou encore
   * la date de création de l'illustration ou de création du code-barres à deux dimensions.

On peut prévoir au moins l'une des étapes consistant à, pour chaque bloc :
- disposer les sous-blocs codants et les sous-blocs non-codants de sorte que :
   o au moins une ligne du bloc comprend un ensemble de sous-blocs codants adjacents deux à deux, ledit ensemble étant entouré d'un ensemble de sous-blocs non-codants, et
   o au moins une colonne du bloc comprend un ensemble de sous-blocs codants adjacents deux à deux, ledit ensemble étant entouré d'un ensemble de sous-blocs non-codants ; et
- disposer les sous-blocs codants et les sous-blocs non-codants de sorte que :
   o pour au moins une colonne comprenant un ensemble de sous-blocs codants, chaque sous-bloc non-codant de ladite colonne encode un résultat respectif de l'application d'un code correcteur d'erreurs respectif aux valeurs encodées par ledit ensemble de sous-blocs codants de ladite colonne,
   o pour au moins une ligne comprenant un ensemble de sous-blocs codants, chaque sous-bloc non-codant de ladite ligne encode un résultat respectif de l'application d'un code correcteur d'erreurs respectif aux valeurs encodées par ledit ensemble de sous-blocs codants de ladite ligne.

On peut prévoir en outre des étapes consistant à :
- brouiller l'illustration à l'aide d'un algorithme de chiffrement, et
- intégrer la clé de déchiffrement de l'illustration brouillée dans le code-barres à deux dimensions.

Ce qui est particulièrement utile par exemple pour une illustration de type photographie d'identité. De préférence, l'illustration est brouillée après avoir défini ou identifié un ensemble de points remarquables et avant la fixation de l'illustration brouillée sur son support de destination.

Selon un autre de ses objets, l'invention concerne un procédé d'authentification d'une illustration, comprenant une étape consistant à :
- réaliser une prise de vue de l'illustration et du code-barres à deux dimensions obtenus selon l'invention, par un capteur optique.

On peut prévoir des étapes consistant à :
- décoder le message dudit code-barres à deux dimensions,
- sur l'illustration lue par le capteur optique :
   o définir ou identifier un ensemble de points remarquables sur l'illustration lue par le capteur optique,
   o recalculer un ensemble d'attributs en fonction de certains au moins des points remarquables dudit ensemble,
   o sélectionner, parmi l'ensemble des attributs recalculés, un ensemble d'au moins un attribut permettant de définir une empreinte numérique,
- comparer la valeur de la différence entre les attributs décodés dudit code-barres à deux dimensions et les attributs recalculés à une valeur seuil prédéterminée enregistrée dans une mémoire, et
- optionnellement vérifier la signature cryptographique.

On peut prévoir que l'illustration et le code-barres 2D sont :
- solidaires l'un de l'autre, le procédé comprenant une étape consistant à afficher simultanément l'illustration et le code-barres à deux dimensions ou transmettre simultanément l'illustration et le code-barres à deux dimensions par un même moyen de communication,
- non solidaires l'un de l'autre, le procédé comprenant une étape consistant à :
   o transmettre l'illustration et le code-barres à deux dimensions par un moyen de communication respectif, optionnellement simultanément,
   o transmettre l'illustration et le code-barres à deux dimensions par un même moyen de communication de manière différée dans le temps.

Enfin, selon un autre de ses objets, l'invention concerne un programme d'ordinateur comprenant des instructions de code de programme pour l'exécution des étapes du procédé selon l'invention, lorsque ledit programme est exécuté sur un ordinateur.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

la figure 1 illustre une illustration au sens de la présente l'invention, en l'espèce une photographie d'identité,
la figure 2 illustre un mode de réalisation d'un code-barres 2D au sens de la présente l'invention, entourant l'illustration de la figure 1, et comprenant des données extrinsèques au sens de la présente l'invention,
la figure 3 illustre des attributs métriques au sens de la présente l'invention,
la figure 4 illustre un mode de réalisation d'un bloc au sens de la présente l'invention.

### DESCRIPTION DETAILLEE

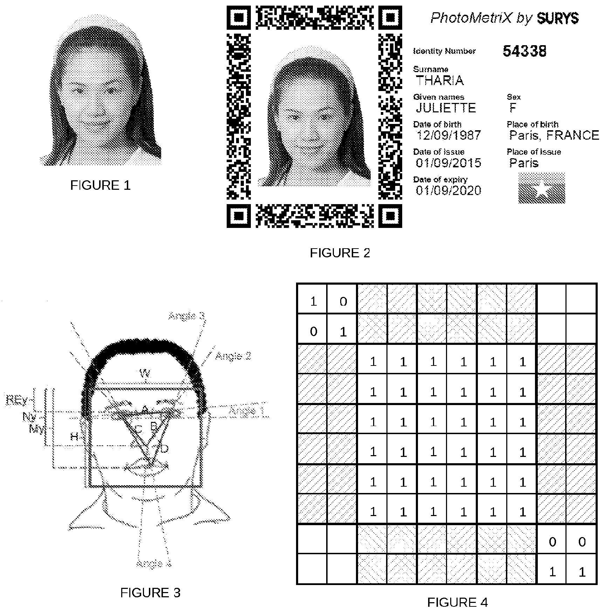

Une illustration est représentée en figure 1. En l'espèce, l'illustration et une photographie d'identité, en particulier destinée à un document d'identité.

On prévoit tout d'abord une étape consistant à numériser l'illustration si celle-ci ne se présente pas déjà sous forme numérique. Par simplification, on entend ci-après indistinctement l'illustration ou son fichier numérique correspondant.

Pour pouvoir ultérieurement authentifier l'illustration et vérifier son intégrité, c'est-à-dire sa non-falsification, il est proposé un mécanisme d'encodage décrit ci-dessous.

### Points remarquables

On prévoit une étape consistant à définir, ou identifier, un ensemble de points remarquables sur l'illustration.

Un point remarquable est défini comme un point de l'illustration, c'est-à-dire un pixel ou un ensemble de pixels adjacents deux à deux, pour lequel le gradient de contraste, selon une direction et une distance prédéfinies, est supérieur à une valeur seuil prédéfinie.

Par exemple, un point remarquable est un point d'impression d'un caractère alphanumérique ou kanji. Un point remarquable peut également être purement graphique, c'est-à-dire non-alphanumérique, comme par exemple un point de l'iris d'un œil.

Pour une photographie d'une personne, des points remarquables peuvent être par exemple des éléments usuels de biométrie tels que les yeux, le nez, la commissure des lèvres ou du centre de la bouche, etc.

Plus généralement, des points remarquables peuvent être des éléments graphiques situés dans un environnement aux caractéristiques physiques ou mathématiques (en traitement d'images) particulières, comme par exemple des éléments graphiques autour desquels un gradient intense se forme, ou qui répondent à des critères de traitement d'images tels que les détecteurs de Stephen-Harris. Par gradient « intense », on entend un gradient dont la valeur est supérieur à une valeur seuil.

### Attributs

A partir de l'ensemble de points remarquables, on prévoit une étape consistant à calculer un ensemble d'attributs qui concourent au caractère identifiable, voire unique, de celle-ci. Les attributs comprennent un ensemble de métriques, c'est-à-dire un ensemble de distances ou angles entre certains points remarquables.

Les attributs comprennent par exemple les coordonnées de points remarquables (par rapport à un repère prédéterminé), les distances entre certains points remarquables, des valeurs de gradient de contraste autour des points remarquables, etc.

La position de l'illustration dans son contexte de représentation (par exemple dans le cadre présenté sur la figure 2), que cette position soit aléatoire ou imposée, peut également être un attribut.

Pour une photographie d'une personne, des attributs peuvent être par exemple des éléments usuels de biométrie tels que des rapports de distance entre les positions des yeux, du nez, de la commissure des lèvres ou du centre de la bouche, ou des angles entre ces mêmes éléments, etc.

Les attributs peuvent être calculés grâce à des logiciels standards de biométrie pour les illustrations de portraits.

Par exemple, pour une illustration représentant un portrait, les attributs peuvent être calculés en se basant sur la morphologie du visage (position des yeux, du nez et de la bouche) et sur l'orientation de la tête au moment de la prise de vue (tête droite, légèrement penchée vers la gauche, légèrement penchée vers la droite, etc.).

On peut aussi utiliser l'algorithme dit SIFT pour "Scale Invariant Feature Transform" en anglais, ou l'algorithme dit SURF pour "Speeded Up Robust Features" en anglais, qui sont tous deux des descripteurs locaux qui consistent, dans un premier temps, à détecter un certain nombre de points remarquables dans l'image, pour ensuite calculer un descripteur décrivant localement l'image autour de chaque point remarquable. La qualité du descripteur est mesurée par sa robustesse aux changements possibles que peut subir une image, par exemple un changement d'échelle et une rotation.

Pour l'algorithme SIFT, décrit notamment dans la publication D. Lowe. Object récognition from local scale-invariant features. IEEE International Conférence on Computer Vision, pages 1150-1157, 1999, la détection des points est basée sur les différences des gaussiennes (DoG) obtenues par le calcul de la différence entre chaque couple d'images lissées par un filtre gaussien, en variant à chaque fois le paramètre sigma (c'est à dire la déviation standard) du filtre. Les DoG peuvent être calculé pour différents niveaux d'échelle permettant d'introduire la notion de l'espace d'échelle. La détection des potentielles zones de points d'intérêt / points remarquables s'effectue en recherchant les extrema selon le plan de la dimension de l'image (x,y) et le plan du facteur d'échelle. Ensuite une étape de filtrage est nécessaire pour supprimer les points non pertinents, en éliminant par exemple les points dont le contraste est trop faible.

Le calcul du descripteur SIFT s'effectue sur une zone autour de chaque point d'intérêt par exemple de 16x16 pixels, subdivisée en 4x4 zones de 4x4 pixels. Sur chacune des 16 zones, un histogramme des orientations du gradient basé sur 8 intervalles est alors calculé. La concaténation des 16 histogrammes donne un vecteur descripteur de 128 valeurs.

Pour l'algorithme SURF, décrit notamment dans la publication H. Bay, T. Tuylelaars, and L. Van Gool. Surf : Speeded up robust features. European Conférence on Computer Vision, pages 404-417, 2006, la méthode consiste à utiliser le déterminant de la matrice Hessienne, à calculer une approximation des dérivées secondes des gaussiennes de l'image par le biais de filtres à différentes échelles en utilisant des masques de différentes tailles (par exemple 9x9, 15x15, 21x21, ...). Pour le calcul de l'orientation des points et les descripteurs autour des points, le principe est basé sur les sommes des réponses des ondelettes de Haar horizontales et verticales ainsi que leurs normes. La zone circulaire de description est divisée là encore en 16 régions. Une analyse en ondelettes est effectuée sur chaque région afin de construire le descripteur final. Ce dernier est constitué de la somme des gradients en x et en y ainsi que de la somme de leur norme respective pour l'ensemble des 16 régions. Le vecteur descripteur est ainsi constitué de 64 valeurs qui représentent des propriétés extraites à la fois dans l'espace normal et dans celui des échelles de grandeur.

De préférence, on prévoit une étape consistant à classer les attributs selon un ordre de priorité de vraisemblance, ce qui permet de ne sélectionner que les plus efficaces pour détecter une éventuelle manipulation de l'illustration.

Par exemple, la distance entre deux yeux d'un être humain adulte est en moyenne de 63 mm, et généralement comprise entre 58 mm et 72mm. Pour une illustration représentant un portrait, si un attribut calcule que la distance entre les deux yeux est supérieure à une valeur prédéterminée, en l'espèce 8 cm, ou inférieure à une autre valeur prédéterminée, en l'espèce 5 cm, on peut prévoir que cet attribut est rejeté (non sélectionné).

On peut donc prévoir une étape consistant à sélectionner tout ou partie des attributs calculés. L'ensemble d'attributs sélectionnés définit une empreinte numérique de l'illustration.

De préférence, on prévoit de sélectionner un nombre d'attributs supérieurs à une valeur seuil enregistrée dans une mémoire. Plus les métriques sont nombreuses et différentes les unes des autres, plus le taux de confusion diminue.

### Empreinte

Une fois les attributs sélectionnés, on peut alors enregistrer ladite empreinte numérique dans une mémoire. En l'espèce, l'empreinte numérique est enregistrée sous forme de vecteur de données dans une mémoire temporaire. Typiquement, le vecteur de données comprend les valeurs des attributs sélectionnés, juxtaposées deux à deux.

On peut aussi prévoir une étape consistant à ajouter à l'empreinte numérique des données extrinsèques à l'illustration, en particulier des données intrinsèques à l'environnement dont l'illustration est solidaire.

Par exemple, pour une illustration telle qu'une photographie dans un environnement tel qu'un document, en particulier un document d'identité, on peut prévoir au moins l'un des ensembles de données parmi :
- des données relatives au porteur dudit document et inscrites dans ledit document, par exemple le nom, le prénom, la taille, la date de naissance du porteur, etc. ; et qui peuvent faciliter le contrôle du document,
- des données relatives audit document, par exemple des informations utiles à l'utilisation dudit document (date de validité, périmètre d'usage,...) de préférence dont l'authenticité est prouvée par la signature cryptographique décrite ultérieurement,
- des métadonnées du document, par exemple :
   o une classification, des données provenant de bases de données externes, des conditions d'utilisation, etc. ;
   o une « charge utile » telle qu'une empreinte digitale, l'empreinte de l'iris d'un œil, etc. du porteur du document, représentée sous la forme d'un code de minuties ; ou encore
- la date de création de l'illustration ou de création du code-barres 2D décrit ci-après.

En particulier, on peut prévoir que la charge utile soit un ou plusieurs éléments d'identification 3D, et non pas limités au 2D. En l'espèce on prévoit un ensemble d'au moins une métrique 3D.

En ce sens, on prévoit de :
- prendre préalablement une photographie 3D du porteur,
- extraire des données biométriques ou des métriques spécifiques 3D dudit porteur,
- inclure la ou les métriques spécifiques dans le code-barres 2D, de préférence de manière à être compatible avec une reconnaissance faciale 2D ou 3D ultérieure.

Les éléments d'identification 3D peuvent être complémentaires des éléments 2D ou les remplacer selon les cas.

Les données biométriques ou les métriques spécifiques 3D du porteur sont typiquement des distances entre deux points remarquables 3D, par exemple la distance entre un point d'une oreille et un point des yeux, du nez ou de la bouche, etc. Alors que de telles distances peuvent varier avec une photographie 2D en fonction de l'objectif utilisé, cette distance est invariante en 3D.

Par convention, on appelle « empreinte » indistinctement l'ensemble d'attributs sélectionnés et l'ensemble d'attributs sélectionnés auquel sont ajoutées les données extrinsèques à l'illustration.

### Compression

L'empreinte numérique est ensuite préférentiellement compressée pour ne représenter que quelques octets d'informations.

### Signature

L'empreinte numérique éventuellement compressée est alors signée au moyen d'une signature cryptographique qui permet de prouver que l'ensemble de ces informations ont été émises par une source de confiance.

Avantageusement, on prévoit de signer au moyen d'une signature cryptographique à clef publique, en particulier compacte, de préférence faisant appel à la cryptographie sur des courbes elliptiques, et par exemple selon l'algorithme ECDSA pour *Elliptic Curve Digital Signature Algorithm* en anglais.

Cette signature exploite l'asymétrie entre la clef privée et la clef publique et permet de signer de manière sécurisée l'empreinte numérique, tout en s'assurant :
- d'une part, que personne ne disposant du certificat ne soit en mesure de refaire ladite signature de l'empreinte numérique (et ainsi de pouvoir faire croire que le contenu provient de source de confiance alors qu'il ne l'est pas) ; et
- d'autre part, que chacun puisse vérifier l'authenticité de l'empreinte numérique et de l'identité de son signataire, au moyen d'une clef sans danger fournie par exemple dans une application sur un objet communicant (téléphone, smartphone, tablette, ordinateur portable, etc.) équipé d'un objectif optique, ou dans un logiciel ad hoc.

### Code-barres 2D

On prévoit une étape consistant à encoder un message sous la forme d'un code-barres à deux dimensions, dit code-barres 2D, représenté par des pixels.

Le message comprend l'un parmi :
- un ensemble d'au moins un attribut,
- l'empreinte numérique,
- l'empreinte numérique compressée,
- l'empreinte numérique signée non compressée, et
- l'empreinte numérique compressée signée.

On peut également prévoir que le message comprend en outre :
- un ensemble d'au moins un point remarquable à partir duquel les attributs sont calculés, ce qui permet typiquement de ne calculer l'empreinte que sur une partie seulement d'une illustration.

Le code-barres 2D est ensuite rendu solidaire de l'illustration, par exemple par impression sur le support de l'illustration, et en particulier sur une page d'un document d'identité. Le code-barres 2D peut aussi être imprimé sous forme d'étiquette collée au support de l'illustration. D'autres techniques peuvent être mises en œuvre, par exemple par gravure ou autre, tant que le code-barres 2D peut être reconnu optiquement.

On prévoit que le code-barres 2D est disposé de manière prédéfinie par rapport à l'illustration, c'est-à-dire que sa forme est prédéfinie, ses dimensions sont prédéfinies et la position relative entre le code-barres 2D et l'illustration est également prédéfinie.

Dans le domaine de l'art, si l'illustration est une peinture, on peut prévoir que le code-barres 2D est imprimé sur le support de la peinture, par exemple une toile, et de préférence caché par le cadre de celle-ci ; si l'illustration est une sculpture, on peut prévoir que le code-barres 2D est imprimé ou gravé sur le socle de celle-ci.

On peut prévoir que le code-barres 2D encadre l'illustration, en l'espèce avec un cadre polygonal, et plus particulièrement avec un cadre rectangulaire, comme illustré figure 2, ce qui est avantageux dans le domaine de la sécurité.

De préférence, la position relative de l'illustration et du code-barres 2D encadrant celle-ci comporte un aléa de position et cette position relative est un attribut, ce qui permet de sécuriser encore l'empreinte numérique. En effet, deux illustrations identiques (ou une même illustration) génèrent un premier et un deuxième code-barres 2D identiques. Mais grâce à l'aléa de position, la position relative du premier code-barres 2D et la position relative du deuxième code-barres 2D est différente. En particulier, l'aléa de position est un aléa prédéterminé et non un aléa mécanique du par exemple à la fabrication.

Ainsi, dans le domaine de la sécurité, il peut arriver qu'un document d'identité soit perdu et que le porteur dudit document perdu fasse faire un nouveau document d'identité avec la même photographie que celle utilisée pour le document d'identité perdu. Dans ce cas, comme la position de la photographie sur le nouveau document d'identité n'est pas exactement à la même position que sur le document d'identité perdu, alors l'attribut correspondant du nouveau document est différent de l'attribut correspondant du document d'identité perdu. Il est ainsi possible de distinguer deux versions (autrement identiques) d'un même document.

Typiquement, le code-barres 2D est construit au sein d'un ensemble d'amers. Ces amers permettent de redresser par traitement des images à la fois l'illustration et le code-barres 2D. Le nombre d'amers peut-être adapté en fonction de la surface cible sur laquelle l'illustration est apposée / imprimée / inscrite / collée etc. En effet, la surface cible peut être plane mais aussi cylindrique, conique, tronconique, etc. Les éléments à redresser sont inclus dedans pour assurer leur redressement optimal.

Pour une surface cible plane, comme illustré figure 2, on prévoit de préférence trois ou quatre amers qui entourent l'illustration à sécuriser.

L'encodage permet d'inscrire à l'immédiate proximité de l'illustration et de manière codée, des éléments de sécurité qui assureront une vérification facile au moyen d'un objet communicant ou d'une caméra (y compris webcam) quelconque.

La proximité immédiate de l'illustration et du code-barres 2D permet d'assurer une certaine sécurité en ce que l'altération (volontaire ou non) de l'illustration risque d'endommager le code-barres 2D, et réciproquement. En outre, elle permet que l'illustration et le code-barres 2D soient lus simultanément par un capteur optique

### Encodage de la redondance

Le code-barres 2D inclut un certain nombre de propriétés de redondance du message pour éviter les difficultés de lecture ultérieure. Une implémentation possible est l'utilisation d'un code correcteur, typiquement l'un des codes parmi :
un Code de Hamming
un Code de Golay
un Code de Reed-Müller
un Code de Goppa
un Code de Xing, et
un code de Reed-Solomon.

Un exemple de méthode d'encodage du code-barres 2D consiste à créer une pluralité de blocs de M lignes x N colonnes d'éléments binaires chacun, avec M et N des entiers naturels tous deux supérieurs ou égaux à 3.

De préférence M = N de sorte à obtenir des blocs carrés.

En fonction de la longueur du message, ledit message peut être scindé en fragments, chaque fragment étant encodé sur un bloc respectif. Par concision, on assimilera message et fragment(s).

Les blocs peuvent être répartis suivant des formes variées adaptées au support utilisé. Par exemple, les blocs peuvent se trouver répartis dans le fond d'une photographie ou former un motif particulier. La seule contrainte est qu'ils restent à l'intérieur de la surface couverte par les amers ou dans leur proximité immédiate, afin de permettre un bon redressement.

Dans un bloc codant, un fragment est encodé sur un ensemble d'éléments binaires appelés « codants » dont la position est connue et prédéterminée.

Il est proposé ici que chaque bloc codant contient, outre les éléments binaires codants, un ensemble d'éléments binaires non-codants, différents des éléments binaires codants, et dont la position est également connue et prédéterminée.

En l'espèce, on prévoit que chaque bloc M x N est organisé en :
- un ensemble de sous-blocs codants, chaque sous-bloc codant comprenant un ensemble McxNc d'éléments binaires codants ; avec Mc et Nc deux entiers naturels tels que Mc<M et Nc<N, en particulier Mc=M/2 et Nc=N/2, et
- un ensemble de sous-blocs non-codants, chaque sous-bloc non-codant comprenant un ensemble MnxNn d'éléments binaires non-codants ; avec Mn et Nn deux entiers naturels tels que Mn<M et Nn<N, en particulier Mn=M/2 et Nn=N/2.

Selon l'invention, chaque bloc contient donc un ensemble de sous-blocs d'éléments binaires codants, et un ensemble de sous-blocs d'éléments binaires non-codants, la position de chaque sous-bloc étant connue et prédéterminée.

De préférence, si M=N, on prévoit alors que Mc=Nc et Mn=Mn de sorte à obtenir également des sous-blocs carrés.

De préférence, Mc=Mn et Nc=Nn, de sorte que les sous-blocs codants aient la même taille que les sous-blocs non-codants.

Par exemple, comme illustré sur la figure 4, Mc=Nc=Mn=Nn=2. Chaque bloc est donc organisé en sous-blocs de 2 x 2 éléments binaires codants ou non-codants chacun, illustrés en traits gras sur la figure 4, et encodant chacun 4 bits soit 2^4 = 16 valeurs.

On prévoit qu'une partie au moins des sous-blocs non-codants d'un bloc donné implémentent un code correcteur d'erreurs, en l'espèce un code de Reed-Solomon, sur les données encodées par une partie au moins des sous-blocs codants.

On peut prévoir que :
- L'un au moins des sous-blocs non-codants est un sous-bloc de synchronisation servant à resynchroniser le bloc au moyen d'un amer, par exemple un code conventionnel tel que (1, 0, 0, 1) comme illustré figure 4 pour le sous-bloc positionné en haut à gauche du bloc,
- Deux au moins des sous-blocs non-codants sont des sous-blocs de sécurisation disposés de préférence diamétralement opposés, ce qui permet de sécuriser une diagonale centrale du bloc au moyen d'un code correcteur d'erreur, en l'espèce de Reed-Solomon et par exemple un code de Reed-Solomon RS(5,3) pour un bloc 5x5, ce qui est illustré par des sous-blocs vierges en bas à gauche et en haut à droite du bloc 10x10 de la figure 4,
- L'un au moins des sous-blocs non-codants est un sous-bloc de numérotation permettant de numéroter le bloc (numérotation de 0 à 15 dans ce cas), ce qui est utile en cas d'organisation non linéaire, et qui est illustré par le sous bloc (0, 0, 1, 1) en bas à droite du bloc de la figure 4.

Le sous-bloc de numérotation peut être remplacé par un sous-bloc de sécurisation, ou autre.

De préférence, le sous-bloc de synchronisation, les sous-blocs de sécurisation et l'éventuel sous-bloc de numérotation sont disposés aux 4 coins du bloc, comme illustré figure 4.

De préférence, on prévoit que pour un bloc :
- au moins une ligne du bloc comprend un ensemble d'éléments binaires (respectivement un ensemble de sous-blocs) codants adjacents deux à deux, ledit ensemble étant entouré d'un ensemble d'éléments binaires (respectivement un ensemble de sous-blocs) non-codants, et
- au moins une colonne du bloc comprend un ensemble d'éléments binaires (respectivement un ensemble de sous-blocs) codants adjacents deux à deux, ledit ensemble étant entouré d'un ensemble d'éléments binaires (respectivement un ensemble de sous-blocs) non-codants.

En particulier, on peut prévoir que l'ensemble des sous-blocs non-codants d'une ligne donnée implémentent un code correcteur d'erreur des données codées par l'ensemble de sous-blocs codants de ladite ligne.

Similairement, on peut prévoir que l'ensemble des sous-blocs non-codants d'une colonne donnée implémentent un code correcteur d'erreur des données codées par l'ensemble de sous-blocs codants de ladite colonne.

Ainsi, chaque ligne et chaque colonne de chaque bloc bénéficient d'une redondance par un algorithme correcteur d'erreurs, par exemple un code de Reed-Solomon.

Dans un mode de réalisation, les sous-blocs codants sont disposés au centre du bloc et entourés des sous-blocs non-codants.

Grâce à cette caractéristique, chaque bloc comprend un code correcteur dans deux directions perpendiculaires simultanées, ce qui permet de limiter les risques que des rayures, le plus souvent linéaires, n'empêchent la lecture d'une partie de l'information de code-barres 2D.

En particulier, on peut prévoir que chaque sous-bloc non-codant d'une ligne donnée implémente un code de Reed-Solomon RS(X,Y) des sous-blocs codant de ladite ligne, avec :
- X le nombre de sous-blocs total (codants et non-codants) de ladite ligne, et
- Y le nombre de sous-blocs non-codants de ladite ligne.

En l'espèce, avec un bloc 10x10 comprenant 5 sous-blocs 2x2 répartis en 3 sous-blocs codants et 2 sous-blocs non-codants, on a X=M/2, c'est-à-dire M=10 ; X=5 et Y=X-2=3. Dans cet exemple illustré sur la figure 4, on a donc au moins une ligne comprenant 3 sous-blocs codants encadrés par 2 sous-blocs non-codants qui implémentent chacun un code de Reed-Solomon RS(5,3).

Similairement, on peut prévoir que chaque sous-bloc non-codant d'une colonne donnée implémente un code de Reed-Solomon RS(X',Y') des sous-blocs codant de ladite ligne, avec :
- X' le nombre de sous-blocs total (codants et non-codants) de ladite colonne, et
- Y' le nombre de sous-blocs non-codants de ladite ligne.

En l'espèce, avec un bloc 10x10 comprenant 5 sous-blocs 2x2 repartis en 3 sous-blocs codants et 2 sous-blocs non-codants, on a X'=M/2, c'est-à-dire M=10 ; X'=5 et Y'=X'-2=3. Dans cet exemple illustré sur la figure 4, on a donc au moins une colonne comprenant 3 sous-blocs codants encadrés par 2 sous-blocs non-codants qui implémentent chacun un code de Reed-Solomon RS(5,3).

Dans ce cas, chaque bloc comprend donc 5 × 5 sous-blocs, répartis en 3 x 3 sous-blocs codants centraux et en 16 sous-blocs non-codants périphériques. On prévoit que les 3 x 3 sous-blocs centraux contiennent le message, représenté par l'ensemble de valeurs 1 sur la figure 4. Les sous-blocs de la première ligne, de la dernière ligne, de la première colonne et de la dernière colonne du bloc constituent les sous-blocs non-codants périphériques. 4 sous-blocs périphériques constituent les coins du bloc. Les autres sous-blocs constituent les sous-blocs codants centraux.

Une fois le code-barres 2D encodé, il est solidarisé de l'illustration, par exemple par impression sur le même support que celle-ci.

En particulier, on peut prévoir, pour plus de discrétion et suivant le type d'usage, que le code soit imprimé avec une encre invisible, comprenant typiquement des pigments UV ou IR, ce qui permet de ne pas être visible, donc de ne pas gêner la lecture / visualisation de l'illustration en lumière visible, et d'être malgré tout contrôlable, par un contrôle sous éclairage UV ou IR.

### Décodage

On prévoit de réaliser une capture optique de l'illustration et du code-barres 2D, grâce à un objectif optique, de préférence simultanément.

Par exemple, l'objectif optique est celui d'un objet communicant, l'objet communicant comprenant également une mémoire. Alternativement, l'objectif optique peut être une caméra ou une webcam, reliée à un calculateur et une mémoire.

Un programme d'ordinateur permettant le décodage décrit ci-après est enregistré dans la mémoire.

On prévoit une étape consistant à rechercher la position des amers, par exemple par l'emploi de détecteurs de gradients.

Une fois les amers repérés, on prévoit une étape consistant à redresser l'image incluse entre les amers, par exemple au moyen de la méthode Warp-Affine dans la bibliothèque OpenCV.

Le redressement consiste à reconstruire, malgré un angle de prise de vue parfois non orthogonal au plan de l'illustration, l'ensemble des composants du code-barres 2D tels qu'ils se seraient trouvés sur une surface initiale plane.

On prévoit ensuite une étape consistant à faire correspondre l'image redressée avec une grille prédéterminée, ce qui permet d'effectuer la lecture des pixels du code-barres 2D et la conversion de ceux-ci en une chaîne de symboles binaires.

On peut alors décoder le message, en passant ces symboles à l'algorithme inverse de l'algorithme utilisé pour l'encodage.

La signature est alors vérifiée pour s'assurer qu'il s'agit bien d'un contenu authentique émis par l'autorité signataire. Si ce n'est pas le cas, le message peut être rejeté comme non authentique.

Si l'authenticité est vérifiée, les caractéristiques de l'illustration, les données (attributs) et les métadonnées sont extraites du code-barres 2D. Ces attributs extraits du code-barres 2D sont alors dits « lus ».

En parallèle (ou en série) des opérations précédentes, l'illustration lue par le capteur optique est traitée pour en extraire les mêmes points remarquables et les mêmes attributs sélectionnés que lors de la génération du code-barres 2D. Ces attributs extraits de l'image numérique de l'illustration sont alors dits « recalculés ». En particulier, on peut considérer tout ou partie des points remarquables initialement enregistrés, en fonction du niveau de confiance souhaité.

On prévoit alors une étape consistant à comparer la valeur de la différence entre les attributs lus et les attributs recalculés à une valeur seuil prédéterminée enregistrée dans une mémoire.

Typiquement la différence entre attributs lus et les attributs recalculés est effectuée au moyen d'un ensemble de métriques (typiquement des rapports de distance ou d'angles), par exemple euclidiennes.

Par exemple, comme illustré figure 3, on prévoit que :
- une métrique REy correspond à la distance entre les deux pupilles,
- une métrique Ny correspond à la distance entre les deux narines,
- une métrique My correspond à la distance entre les deux commissures des lèvres,
- une métrique Angle2 correspond à l'angle entre les pupilles et la pointe du nez,
- etc.

Si la distance entre les attributs lus et les attributs recalculés est en dessous de la valeur seuil, on considère que l'illustration lue par le capteur optique est bien l'illustration originale, sinon on considère l'illustration lue comme non authentique.

Avantageusement, cette comparaison peut être mise en œuvre hors ligne. Il est donc possible de vérifier l'authenticité d'une illustration en tout endroit, grâce à un objet communicant et sans connexion réseau.

Dans le cas où l'empreinte numérique comprend en outre des données extrinsèques à l'illustration, lesdites données extrinsèques (par exemple le numéro de carte, le nom, le prénom, etc.) décodées du code-barres 2D peuvent alors en outre être affichées à un utilisateur sur un écran d'affichage, et lui permettre de vérifier par lui-même qu'il s'agit bien des informations présentes sur le document.

Les métadonnées peuvent également servir à contrôler les caractéristiques propres au porteur du document, grâce à des moyens techniques additionnels (par exemple un lecteur d'empreintes, un scanner d'iris, etc.). L'illustration (la photographie) ainsi authentifiée, peut permettre une vérification biométrique du porteur.

Avantageusement, l'extraction du message est mise en œuvre automatiquement.

La présente invention permet d'authentifier une même illustration à deux instants distincts, malgré les endommagements inévitables dans le cycle de vie de celle-ci ou d'un document supportant celle-ci.

La présente invention peut aussi permettre d'authentifier que la copie d'une illustration est conforme à l'originale.

La présente invention n'est pas limitée aux modes de réalisation précédemment décrits. Par exemple elle peut être mise en œuvre dans le domaine de l'authentification de marques déposées, par exemple pour authentifier que la marque apposée sur un produit est bien la marque originale ; pour l'authentification d'étiquettes, en particulier comportant un aléa de fabrication permettant de les caractériser, notamment dans le domaine de la sécurité ou des vins et spiritueux.

En ce sens, une illustration au sens de la présente invention peut être une signature graphique au sens du brevet EP2526531 déposé par la demanderesse.

## Revendications

1. Procédé pour l'authentification d'une illustration, comprenant des étapes consistant à :
- encoder un message sous la forme d'un code-barres à deux dimensions comprenant un ensemble de blocs, chaque bloc codant un fragment dudit message et comprenant un ensemble de (M) lignes et (N) colonnes, et chaque bloc comprenant un ensemble de sous-blocs codants, chaque sous-bloc comprenant un ensemble d'éléments binaires, l'étape d'encodage comprenant des étapes préalables consistant à :
- définir ou identifier un ensemble de points remarquables sur l'illustration,
- calculer un ensemble d'attributs en fonction de certains au moins des points remarquables dudit ensemble,
- sélectionner, parmi l'ensemble des attributs calculés, un ensemble d'au moins un attribut permettant de définir une empreinte numérique,
- optionnellement compresser ladite empreinte numérique,
- optionnellement signer ladite empreinte numérique au moyen d'une signature cryptographique, et
- enregistrer dans le message l'un parmi :
- un ensemble d'au moins un attribut,
- l'empreinte numérique,
- l'empreinte numérique compressée,
- l'empreinte numérique signée non compressée, et
- l'empreinte numérique compressée et signée.
**caractérisé en ce que** chaque bloc codant comprend en outre un ensemble de sous-blocs non-codants dont la position est prédéfinie, le procédé comprenant en outre, pour chaque bloc codant, des étapes consistant à :
- sélectionner un ensemble prédéfini de sous-blocs codants,
- encoder sur un ensemble d'au moins un sous-bloc non-codant prédéfini le résultat de l'application d'un code correcteur d'erreurs aux valeurs encodées par ledit ensemble prédéfini de sous-blocs codants.

2. Procédé selon la revendication 1, comprenant une étape consistant à rendre le code-barres à deux dimensions solidaire de l'illustration.

3. Procédé selon la revendication 2 comprenant une étape consistant à disposer le code-barres 2D de manière prédéfinie par rapport à l'illustration, optionnellement en encadrant l'illustration.

4. Procédé selon l'une quelconque des revendications précédentes, comprenant une étape consistant à sélectionner un nombre d'attributs supérieurs à une valeur seuil enregistrée dans une mémoire.

5. Procédé selon l'une quelconque des revendications précédentes, dans lequel l'illustration est une photographie d'un porteur de document, le procédé comprenant une étape consistant à ajouter à l'empreinte numérique de données extrinsèques à l'illustration, lesdites données extrinsèques comprenant au moins l'un des ensembles de données parmi :
- des données relatives au porteur dudit document et inscrites dans ledit document,
- des données relatives audit document,
- des métadonnées du document, comprenant :
* une classification, des données provenant de bases de données externes, ou des conditions d'utilisation ; ou
* une charge utile 2D ou 3D du porteur du document ; ou encore
* la date de création de l'illustration ou de création du code-barres à deux dimensions.

6. Procédé selon l'une quelconque des revendications précédentes, comprenant au moins l'une des étapes consistant à, pour chaque bloc :
- disposer les sous-blocs codants et les sous-blocs non-codants de sorte que :
o au moins une ligne du bloc comprend un ensemble de sous-blocs codants adjacents deux à deux, ledit ensemble étant entouré d'un ensemble de sous-blocs non-codants, et
o au moins une colonne du bloc comprend un ensemble de sous-blocs codants adjacents deux à deux, ledit ensemble étant entouré d'un ensemble de sous-blocs non-codants ; et
- disposer les sous-blocs codants et les sous-blocs non-codants de sorte que :
o pour au moins une colonne comprenant un ensemble de sous-blocs codants, chaque sous-bloc non-codant de ladite colonne encode un résultat respectif de l'application d'un code correcteur d'erreurs respectif aux valeurs encodées par ledit ensemble de sous-blocs codants de ladite colonne,
o pour au moins une ligne comprenant un ensemble de sous-blocs codants, chaque sous-bloc non-codant de ladite ligne encode un résultat respectif de l'application d'un code correcteur d'erreurs respectif aux valeurs encodées par ledit ensemble de sous-blocs codants de ladite ligne.

7. Procédé selon l'une quelconque des revendications précédentes, comprenant en outre des étapes consistant à :
- brouiller l'illustration à l'aide d'un algorithme de chiffrement, et
- intégrer la clé de déchiffrement de l'illustration brouillée dans le code-barres à deux dimensions.

8. Procédé d'authentification d'une illustration, comprenant une étape consistant à :
- réaliser une prise de vue de l'illustration et du code-barres à deux dimensions obtenus selon l'une quelconque des revendications précédentes par un capteur optique.

9. Procédé d'authentification selon la revendication 8, comprenant des étapes consistant à :
- décoder le message dudit code-barres à deux dimensions,
- sur l'illustration lue par le capteur optique :
o définir ou identifier un ensemble de points remarquables sur l'illustration lue par le capteur optique,
o recalculer un ensemble d'attributs en fonction de certains au moins des points remarquables dudit ensemble,
o sélectionner, parmi l'ensemble des attributs recalculés, un ensemble d'au moins un attribut permettant de définir une empreinte numérique,
- comparer la valeur de la différence entre les attributs décodés dudit code-barres à deux dimensions et les attributs recalculés à une valeur seuil prédéterminée enregistrée dans une mémoire, et
- optionnellement vérifier la signature cryptographique.

10. Procédé selon l'une quelconque des revendications 7 à 9, dans lequel l'illustration et le code-barres 2D sont :
• solidaires l'un de l'autre, le procédé comprenant une étape consistant à afficher simultanément l'illustration et le code-barres à deux dimensions ou transmettre simultanément l'illustration et le code-barres à deux dimensions par un même moyen de communication, ou
• non solidaires l'un de l'autre, le procédé comprenant une étape consistant à :
o transmettre l'illustration et le code-barres à deux dimensions par un moyen de communication respectif, optionnellement simultanément,
o transmettre l'illustration et le code-barres à deux dimensions par un même moyen de communication de manière différée dans le temps.

11. Programme d'ordinateur comprenant des instructions de code de programme pour l'exécution des étapes du procédé selon l'une quelconque des revendications précédentes, lorsque ledit programme est exécuté sur un ordinateur.

## Patentansprüche

1. Verfahren zur Authentifizierung einer Abbildung, das Schritte enthält, die darin bestehen:
- eine Nachricht in Form eines zweidimensionalen Barcodes zu codieren, der eine Einheit von Blöcken enthält, wobei jeder Block ein Fragment der Nachricht codiert und eine Anzahl von (M) Zeilen und (N) Spalten enthält, und jeder Block eine Einheit von codierenden Teilblöcken enthält, wobei jeder Teilblock eine Einheit von Binärelementen enthält,
wobei der Codierschritt vorhergehende Schritte enthält, die darin bestehen:
- eine Einheit von Kennpunkten auf der Abbildung zu definieren oder zu identifizieren,
- eine Einheit von Attributen abhängig von mindestens bestimmten der Kennpunkte der Einheit zu berechnen,
- aus der Einheit der berechneten Attribute eine Einheit von mindestens einem Attribut auszuwählen, das es ermöglicht, einen digitalen Abdruck zu definieren,
- optional den digitalen Abdruck zu komprimieren,
- optional den digitalen Abdruck mittels einer kryptographischen Signatur zu signieren, und
- in der Nachricht eines zu speichern von:
- einer Einheit von mindestens einem Attribut,
- dem digitalen Abdruck,
- dem komprimierten digitalen Abdruck,
- dem nicht komprimierten signierten digitalen Abdruck, und
- dem komprimierten und signierten digitalen Abdruck,
**dadurch gekennzeichnet, dass** jeder codierende Block außerdem eine Einheit von nicht-codierenden Teilblöcken enthält, deren Position vordefiniert ist, wobei das Verfahren außerdem für jeden codierenden Block Schritte enthält, die darin bestehen:
- eine vordefinierte Einheit von codierenden Teilblöcken auszuwählen,
- auf eine Einheit von mindestens einem vordefinierten nicht-codierenden Teilblock das Ergebnis der Anwendung eines Fehlerkorrekturcodes auf die von der vordefinierten Einheit von codierenden Teilblöcken codierten Werte zu codieren.

2. Verfahren nach Anspruch 1, das einen Schritt enthält, der darin besteht, den zweidimensionalen Barcode fest mit der Abbildung zu verbinden.

3. Verfahren nach Anspruch 2, das einen Schritt enthält, der darin besteht, den 2D-Barcode in vordefinierter Weise bezüglich der Abbildung anzuordnen, optional, indem er die Abbildung umrahmt.

4. Verfahren nach einem der vorhergehenden Ansprüche, das einen Schritt enthält, der darin besteht, eine Anzahl von Attributen auszuwählen, die höher sind als ein in einem Speicher gespeicherter Schwellwert.

5. Verfahren nach einem der vorhergehenden Ansprüche, wobei die Abbildung eine Fotografie eines Dokumentinhabers ist, wobei das Verfahren einen Schritt enthält, der darin besteht, dem digitalen Abdruck Daten außerhalb der Abbildung hinzuzufügen, wobei die äußeren Daten mindestens eine der Einheiten von Daten enthalten unter:
- Daten bezüglich des Inhabers des Dokuments und in das Dokument eingetragen,
- Daten bezüglich des Dokuments,
- Metadaten des Dokuments, die enthalten:
* eine Klassifizierung, von externen Datenbanken kommende Daten, oder Nutzungsbedingungen; oder
* eine 2D- oder 3D-Nutzlast des Inhabers des Dokuments; oder auch
* das Datum der Erzeugung der Abbildung oder der Erzeugung des zweidimensionalen Barcodes.

6. Verfahren nach einem der vorhergehenden Ansprüche, das mindestens einen der Schritte enthält, die für jeden Block darin bestehen:
- die codierenden Teilblöcke und die nicht-codierenden Teilblöcke so anzuordnen, dass:
o mindestens eine Zeile des Blocks eine Einheit von paarweise benachbarten codierenden Teilblöcken enthält, wobei die Einheit von einer Einheit von nicht-codierenden Teilblöcken umgeben ist, und
o mindestens eine Spalte des Blocks eine Einheit von paarweise benachbarten codierenden Teilblöcken enthält, wobei die Einheit von einer Einheit von nicht-codierenden Teilblöcken umgeben ist; und
- die codierenden Teilblöcke und die nicht-codierenden Teilblöcke so anzuordnen, dass:
o für mindestens eine Spalte, die eine Einheit von codierenden Teilblöcken enthält, jeder nicht-codierende Teilblock der Spalte ein jeweiliges Ergebnis der Anwendung eines jeweiligen Fehlerkorrekturcodes auf die von der Einheit von codierenden Teilblöcken der Spalte codierten Werte codiert,
o für mindestens eine Zeile, die eine Einheit von codierenden Teilblöcken enthält, jeder nicht-codierende Teilblock der Zeile ein jeweiliges Ergebnis der Anwendung eines jeweiligen Fehlerkorrekturcodes auf die von der Einheit von codierenden Teilblöcken der Zeile codierten Werte codiert.

7. Verfahren nach einem der vorhergehenden Ansprüche, das außerdem Schritte enthält, die darin bestehen:
- die Abbildung mit Hilfe eines Verschlüsselungsalgorithmus zu verwürfeln, und
- den Verschlüsselungsschlüssel der verwürfelten Abbildung in den zweidimensionalen Barcode zu integrieren.

8. Verfahren zur Authentifizierung einer Abbildung, das einen Schritt enthält, der darin besteht:
- eine Aufnahme der Abbildung und des zweidimensionalen Barcodes, die gemäß einem der vorhergehenden Ansprüche erhalten werden, durch einen optischen Sensor zu realisieren.

9. Authentifizierungsverfahren nach Anspruch 8, das Schritte enthält, die darin bestehen:
- die Nachricht des zweidimensionalen Barcodes zu decodieren,
- auf der vom optischen Sensor gelesenen Abbildung:
o eine Einheit von Kennpunkten auf der Abbildung zu definieren oder zu identifizieren, die vom optischen Sensor gelesen wird,
o eine Einheit von Attributen abhängig mindestens von bestimmten der Kennpunkte der Einheit neu zu berechnen,
o aus der Einheit der neu berechneten Attribute eine Einheit von mindestens einem Attribut auszuwählen, das es ermöglicht, einen digitalen Abdruck zu definieren,
- den Wert der Differenz zwischen den decodierten Attributen des zweidimensionalen Barcodes und den neu berechneten Attributen mit einem vorbestimmten Schwellwert zu vergleichen, der in einem Speicher gespeichert ist, und
- optional die kryptographische Signatur zu überprüfen.

10. Verfahren nach einem der Ansprüche 7 bis 9, bei dem die Abbildung und der 2D-Barcode:
• fest miteinander verbunden sind, wobei das Verfahren einen Schritt enthält, der darin besteht, gleichzeitig die Abbildung und den zweidimensionalen Barcode anzuzeigen oder gleichzeitig die Abbildung und den zweidimensionalen Barcode durch eine gleiche Kommunikationseinrichtung zu übertragen,
• nicht fest miteinander verbunden sind, wobei das Verfahren einen Schritt enthält, der darin besteht:
o die Abbildung und den zweidimensionalen Barcode durch eine jeweilige Kommunikationseinrichtung optional gleichzeitig zu übertragen,
o die Abbildung und den zweidimensionalen Barcode durch eine gleiche Kommunikationseinrichtung zeitverzögert zu übertragen.

11. Computerprogramm, das Programmcodeanweisungen zur Ausführung der Schritt des Verfahrens nach einem der vorhergehenden Ansprüche enthält, wenn das Programm auf einem Computer ausgeführt wird.

## Claims

1. Method for authenticating an illustration, comprising steps of:
- encoding a message in the form of a two-dimensional barcode comprising a set of blocks, each block coding a fragment of said message and comprising a set of (M) rows and (N) columns, and each block comprising a set of coding sub-blocks, each sub-block comprising a set of bits,
the encoding step comprising preliminary steps of:
- defining or identifying a set of noteworthy points on the illustration,
- computing a set of attributes based on at least some of the noteworthy points of said set,
- selecting, from the set of computed attributes, a set of at least one attribute for defining a digital fingerprint,
- optionally compressing said digital fingerprint,
- optionally signing said digital fingerprint by way of a cryptographic signature, and
- storing one of the following in the message:
- a set of at least one attribute,
- the digital fingerprint,
- the compressed digital fingerprint,
- the uncompressed signed digital fingerprint, and
- the compressed and signed digital fingerprint,
**characterized in that** each coding block furthermore comprises a set of non-coding sub-blocks whose position is predefined, the method furthermore comprising, for each coding block, steps of:
- selecting a predefined set of coding sub-blocks,
- encoding, on a set of at least one predefined non-coding sub-block, the result of applying an error correction code to the values encoded by said predefined set of coding sub-blocks.

2. Method according to Claim 1, comprising a step of attaching the two-dimensional barcode to the illustration.

3. Method according to Claim 2, comprising a step of positioning the 2D barcode in a predefined manner with respect to the illustration, optionally framing the illustration.

4. Method according to any one of the preceding claims, comprising a step of selecting a number of attributes greater than a threshold value stored in a memory.

5. Method according to any one of the preceding claims, wherein the illustration is a photograph of a document holder, the method comprising a step of adding data extrinsic to the illustration to the digital fingerprint, said extrinsic data comprising at least one of the sets of data from among:
- data relating to the holder of said document and inscribed in said document,
- data relating to said document,
- metadata of the document, comprising:
* a classification, data from external databases, or usage conditions; or
* a 2D or 3D payload of the holder of the document; or else
* the date of creation of the illustration or of creation of the two-dimensional barcode.

6. Method according to any one of the preceding claims, comprising at least one of the steps of, for each block:
- arranging the coding sub-blocks and the non-coding sub-blocks such that:
o at least one row of the block comprises a set of coding sub-blocks that are adjacent in pairs, said set being surrounded by a set of non-coding sub-blocks, and
o at least one column of the block comprises a set of coding sub-blocks that are adjacent in pairs, said set being surrounded by a set of non-coding sub-blocks; and
- arranging the coding sub-blocks and the non-coding sub-blocks such that:
o for at least one column comprising a set of coding sub-blocks, each non-coding sub-block of said column encodes a respective result of applying a respective error correction code to the values encoded by said set of coding sub-blocks of said column,
o for at least one row comprising a set of coding sub-blocks, each non-coding sub-block of said row encodes a respective result of applying a respective error correction code to the values encoded by said set of coding sub-blocks of said row.

7. Method according to any one of the preceding claims, furthermore comprising steps of:
- scrambling the illustration using an encryption algorithm, and
- integrating the key for decrypting the scrambled illustration into the two-dimensional barcode.

8. Method for authenticating an illustration, comprising a step of:
- capturing an image of the illustration and of the two-dimensional barcode that are obtained according to any one of the preceding claims using an optical sensor.

9. Authentication method according to Claim 8, comprising steps of:
- decoding the message of said two-dimensional barcode,
- on the illustration read by the optical sensor:
o defining or identifying a set of noteworthy points on the illustration read by the optical sensor,
o recomputing a set of attributes based on at least some of the noteworthy points of said set,
o selecting, from the set of recomputed attributes, a set of at least one attribute for defining a digital fingerprint,
- comparing the value of the difference between the decoded attributes of said two-dimensional barcode and the recomputed attributes with a predetermined threshold value stored in a memory, and
- optionally verifying the cryptographic signature.

10. Method according to any one of Claims 7 to 9, wherein the illustration and the 2D barcode are:
• attached to one another, the method comprising a step of simultaneously displaying the illustration and the two-dimensional barcode or simultaneously transmitting the illustration and the two-dimensional barcode using one and the same communication means, or
• not attached to one another, the method comprising a step of:
o transmitting the illustration and the two-dimensional barcode using a respective communication means, optionally simultaneously,
o transmitting the illustration and the two-dimensional barcode using one and the same communication means at different times.

11. Computer program comprising program code instructions for executing the steps of the method according to any one of the preceding claims when said program is executed on a computer.
